# EUROPEAN PATENT APPLICATION

(11) **EP 2 641 787 A1**
(43) Date of publication of application: **25.09.2013**
(21) Application number: 12161020.8
(22) Date of filing: 23.03.2012
(51) Int. Cl.: B60S 3/00, B61K 13/00

(54) **A device for removal of ice from a railway vehicle**

(71) Applicant: Lind, Karl-Erik, 722 11 Västerås (SE); Kolli, Dan, 725 92 Västerås (SE)
(72) Inventor: Lind, Karl-Erik, 722 11 Västerås (SE); Kolli, Dan, 725 92 Västerås (SE)
(74) Representative: Neelissen-Subnel, Marianne

(57) **Abstract**

The invention relates to a device (1) and a method for de-icing railway vehicles (12), comprising a first nozzle arrangement (2) adapted to be arranged along a longitudinal axis (L) of rails (3) to spray a medium adapted to remove ice from at least one side of the railway vehicle, and comprising a plurality of first outlets (5) separately arranged along the longitudinal axis (L), a lifting arrangement (6) to move the first nozzle arrangement (2) along a vertical axis (V) configured to adjust a height of the plurality of first outlets in relation to the rail, and a medium adapted to remove ice. The device further comprises a second nozzle arrangement (13) configured to remove ice from the underside of the vehicle and comprising a plurality of second outlets (14) separately arranged along the longitudinal axis, whereby the second outlets are directed towards the underside of the railway vehicle.

## Description

### FIELD OF THE INVENTION

The present invention relates to a device configured to remove ice from railway vehicles, such as a train and a metro, according to the pre-characterized portion of claim 1. The invention also relates to a method for removal of ice from a railway vehicle according to the pre-characterized portion of claim 14.

### BACKGROUND OF THE INVENTION AND PRIOR ART

Railway vehicles are used throughout the year. During the winter, delays are frequently caused due to whether conditions. These delays may be due to the formation and accumulation of ice and snow on the railway vehicle, especially on parts under the wagons such as the wheels, brakes, bogies in which wheel sets are mounted, etc..

Ice and snow must be removed from the railway vehicles. For this purpose, the railway vehicles are taken to a de-icing station. At such station, a de-icing device is used to spray hot-air or a de-icing medium, such as hot water or glycol, on the underside of the railway vehicle, especially on the wheels and brakes. De-icing may be done by hand using a hose to spray a melting medium on the railway vehicle. Different de-icing devices have been developed as well. Most de-icing devices comprise a device on a movable wagon, whereby the wagon moves along the longitudinal axis of the rail, while de-icing the railway vehicle in the de-icing station.

JP2008068686 discloses a device for de-icing railway vehicles comprising a spray nozzle. The device is movable arranged on wheels to run along the longitudinal axis of the rail. The melting medium used is hot water, which is sprayed from the nozzle. The device includes a lifting arrangement for moving the nozzle in a vertical and rotational direction. The device further includes a temperature measuring means for adjusting the temperature of the hot water and an image pick-up means for ranking the areas that need to be de-iced.

JP07-004223 discloses a device for de-icing railway vehicles comprising a wagon and a robot, whereby the robot includes an arm. The device also includes a lifting arrangement for moving the arm in a vertical and rotational direction. The wagon is movable arranged on wheels to run along the longitudinal axis of the railway vehicle. A plurality of nozzle outlets is installed in the arm to spray hot water in a horizontal direction at different heights at the side of the railway vehicle. The robot is automatically controlled by a control unit.

JP2002146740 discloses a device for de-icing railway vehicles comprising a header for spraying a fluid as melting medium through a nozzle arrangement comprising a plurality of outlets, which are separately arranged parallel to the longitudinal axis of the rail. The device is movable arranged on wheels to run alongside the railway vehicle.

US20090188989 discloses a method and a device for de-icing railway vehicles comprising nozzles to spray glycol vertically upwards on the underside of the railway vehicle.

Conventional de-icing devices are capable of de-icing a small part of the length of the railway vehicle. The device needs to be moved along the length of the railway vehicle in order to remove ice and snow from the entire length of the railway vehicle. Therefore, a conventional de-icing procedure for a railway vehicle of standard length takes at least eight hours. This means that the railway vehicle is taken out of service for these at least eight hours.

Some of the conventional de-icing devices are relatively complex constructions with robot arms, image means and the like. These devices must be handled with care and operated by skilled personal.

Railway vehicles may have different heights, i.e. the distance between the rail and the wagon may be different for different types of railway vehicles. Therefore, the heights of the spraying nozzles should preferably be adjustable. This should preferably be done in a simple matter and during de-icing procedures. Changing the height of the nozzles in the known de-icing device is not always possible.

Some railway vehicles are made of parts that comprise materials that do not allow the use of certain fluids, such as water and glycol. Further, the use of hot water increases the risk of re-icing. When hot water is used as melting medium, crystals can be formed under the entire railway vehicle as soon as the railway vehicle leaves the de-icing station. Snow will adhere to these crystals and start to build-up ice immediately.

### SUMMARY OF THE INVENTION

The object of the present invention is to provide a de-icing device and a method for removing ice and snow from railway vehicles, which overcomes the problems mentioned above. The new de-icing device and method should preferably allow for a substantially shorter de-icing procedure. The object is also to provide for a device and method that is easy to control by an operator. The device can preferably be controlled by an automated method. Another object is the provision of a robust device that is relative simple to construct. One object is to provide a device and method, whereby the height of the outlets of the nozzle arrangement in relation to the rail can be adjusted, preferably even during a de-icing operation. A further object is to provide a device that can be used for all types of railway vehicles and irrespective of the height of the vehicle or the material from which the parts of the vehicle are made. The device should preferably remove the ice and snow in an environmentally manner. Yet a further object is to provide a de-icing device and method that reduces the risk for re-icing of the railway vehicle after the railway vehicle leaves the de-icing station and enters into freezing temperature conditions.

The objects are achieved by a device defined in the pre-characterized portion of claim 1, characterized in that the device comprises a second nozzle arrangement configured to remove ice from at least the underside of the railway vehicle and comprising a plurality of second outlets separately arranged along the longitudinal axis, and whereby the second outlets are directed towards the underside of the railway vehicle.

An advantage of the presence of a second nozzle arrangement is that the railway vehicle can be de-iced in half an hour to four hours, preferably in one to two hours. Further, the quality of the de-icing is improved, because the railway vehicle can be de-iced from the side and from the underside during a single de-icing procedure. More parts of the railway vehicle can be reached by the melting medium at the same time.

In one embodiment, the device comprises a medium arrangement configured to spray the medium from the first and second outlets, and comprising a hot medium generating means, one or more first channel for conducting hot medium from the hot medium generating means to the first nozzle arrangement, one or more second channel for conducting hot medium from the hot medium generating means to the second nozzle arrangement.

In a further embodiment, the device comprises a medium arrangement configured to spray the medium from the first and second outlets, and comprising the hot medium generating means, one or more first channel for conducting hot medium from the hot medium generating means to the first nozzle arrangement, one or more second channel for conducting hot medium from the hot medium generating means to the second nozzle arrangement, one or more inlet channel arranged between at least one or more first outlets for re-circulating the medium, and one or more third channel for conducting the medium from the one or more inlet channel to the hot medium generating means.

The new device is relatively robust and simple to construct. It does not comprise robots that move arms under a wagon of a railway vehicle to de-ice wheels and brakes. The device can be used for all types of railway vehicles, irrespectful of the height of the wagon of the railway vehicle in relation to the rail. Another advantage of the new device is that the melting medium can be re-circulated.

In one embodiment, the lifting arrangement moves the first nozzle arrangement continuously up and down in relation to the rail. This continuous movement can be automated using a computer program. The continuous up and down movement assures that different parts of the train that are positioned at different heights in relation to the rail are being de-iced during the de-icing procedure. This improves the quality of the procedure and may save time and cost for personal.

In another embodiment, the first and second nozzle arrangements are fixedly arranged along the longitudinal axis.

In a further embodiment, the first and second nozzle arrangements extend over a distance, which is at least equal to a length of a wagon of the railway vehicle. The new device may also extend along the entire length of the railway vehicle. Because of the length of the new device, the nozzle arrangements do not need to be moved along the longitudinal axis of the rail. Compared to conventional de-icing devices, the new device can be built more robust and simple, because it does not need to be moved on a wagon along the side of the railway vehicle. This also makes the de-icing procedure less time-consuming.

In one embodiment, the first nozzle arrangement is divided in a plurality of first nozzle modules, whereby each module comprises a plurality of first outlets and a lifting arrangement, whereby each first nozzle module is fixedly arranged along the longitudinal axis and movably arranged along the vertical axis. One or more inlet channel may be positioned between one or more first nozzle module. The device according to the present invention may be constructed in different ways. The first nozzle arrangement provided in modules that can be lifted along the vertical axis, presents a robust and relatively simple construction of the device. Another advantage is that such a construction can be installed in existing de-icing stations.

In another embodiment, the second outlets are directed upwards in an angle between 10 to 170° in relation to a transversal axis, which intersects the longitudinal axis. In one embodiment, the second outlets are directed upwards in an angle of substantially 45° in relation to the transversal axis. Preferably, the angle can be varied and adjusted to the height of the railway vehicle or to a particular location under the railway vehicle.

In a further embodiment, the medium that is sprayed from the first and second outlets has a temperature between 25 and 150°C. In another embodiment, the medium is a hot gas. In a further embodiment, the hot gas is hot air at a temperature between 25 and 75°C, or between 30 and 60°C. Hot air has the advantage that it can be used irrespective of the material from which the parts of the railway vehicle is made. Hot air is readily available. By using hot air, the ice and snow can be removed from the railway vehicle in an environmentally manner. Hot air also reduces the risk for re-icing of the railway vehicle after the railway vehicle leaves the de-icing station and enters into freezing temperature conditions. When a gas is used as a melting medium, this gas will remain under the railway vehicle for at least a short period of time and build a cushion of hot gas under the railway vehicle. This improves the efficiency and effectivity of the de-icing procedure. The gas may be removed from the area under the railway vehicle through the inlet channels.

In one embodiment, the device further comprises a control unit configured to control the device. The control unit may for example control the lifting arrangement, the hot medium generating means and/or the direction of the angle of the first and/or second outlets. Preferably, the entire device can be automatically controlled, such that the entire de-icing procedure can be controlled by the control unit. This will further increase the efficiency of the de-icing procedure. The new device is built in a robust and relatively simple manner. The device can be easily controlled by an operator. Less manpower will be needed to de-ice a railway vehicle. Less time and money needs to be spent on educating personal as well.

In another embodiment, the control unit uses a computer comprising a software program adapted to control the device, and whereby the height of the first nozzle arrangement is determined by i) selecting a type of railway vehicle in the software program, and/or ii) measuring the height of the railway vehicle in relation to the rail and entering measured data in the software program. Because different railway vehicles may have different heights and different bogies, it is important to adjust the height and/or direction of the first and second outlets to the type of railway vehicle that is to be de-iced. This adjustment should preferably be done in a simple automated manner using, for example, a computer program on a control unit.

In a further embodiment, the first and/or the second nozzle arrangement comprises a pair of first and/or second nozzle arrangement extending on a respective side of the longitudinal axis. The first and second nozzle arrangement may be present on one side of rail only, so that the railway vehicle can be de-iced on both sides by moving the railway vehicle in two directions through the de-icing station. However, it is preferred to have a pair of nozzle arrangement present on both sides of the longitudinal axis. This will save time for de-icing the railway vehicle. This may also improve the quality of the de-icing procedure. When a hot gas is used as the melting medium a cushion of hot gas can be formed more efficiently under the railway vehicle.

An alternative embodiment relates to a device for de-icing railway vehicles, comprising
- a first nozzle arrangement adapted to be arranged along a longitudinal axis of a pair of rails, configured to spray a medium adapted to remove ice from at least one side of the railway vehicle, comprising
- a plurality of first outlets separately arranged along the longitudinal axis,
- a lifting arrangement adapted to move the first nozzle arrangement along a vertical axis intersecting the longitudinal axis and configured to adjust a height of the plurality of first outlets in relation to the rail, and
- a medium adapted to remove ice, characterized in that the device comprises a medium arrangement configured to spray the medium from the first outlets, and comprising hot medium generating means, one or more first channel for conducting hot medium from the hot medium generating means to the first nozzle arrangement, one or more inlet channel arranged between at least one or more first outlets for re-circulating the medium, and one or more third channel for conducting the medium from the one or more inlet channel to the hot medium generating means.

In this alternative embodiment, the device may further comprises a second nozzle arrangement configured to remove ice from at least the underside of the railway vehicle and comprising a plurality of second outlets separately arranged along the longitudinal axis, and whereby the second outlets are directed towards the underside of the railway vehicle, and whereby the medium arrangement comprises a second channel for conducting hot medium from the hot medium generating means to the second nozzle arrangement.

The object of the present invention is also achieved by a method for de-icing railway vehicles according to the per-characterized portion of claim 14, characterized in that the device comprises
- a second nozzle arrangement configured to remove ice from at least the underside of the railway vehicle and comprising a plurality of second outlets separately arranged along the longitudinal axis, and whereby the second outlets are directed towards the underside of the railway vehicle,
- a control unit configured to control the device, and whereby the control unit uses a computer comprising a software program adapted to control the device, and wherein the method comprises the steps of
- presenting a railway vehicle on the rail in the device,
- determining the height of the first nozzle arrangement by i) selecting a type of railway vehicle in the software program, and/or ii) measuring the height of the railway vehicle in relation to the rail and entering measured data in the software program,
- adjusting the height of the first nozzle arrangement by means of the lifting arrangement in accordance with the determined height, and
- spraying the medium from the first and second outlets.

In one embodiment of the method, the device comprises a medium arrangement configured to spray the medium from the first and second outlets, and comprising hot medium generating means, one or more first channel for conducting hot medium from the hot medium generating means to the first nozzle arrangement, one or more second channel for conducting hot medium from the hot medium generating means to the second nozzle arrangement, one or more inlet channel arranged between at least one or more first outlets for re-circulating the medium, and one or more third channel for conducting the medium from the one or more inlet channel to the hot medium generating means, and
whereby the last method step of spraying the medium is replaced by the steps of
- driving the hot medium from the hot medium generating means through the one or more first and second channel and the first and second outlets, and
- re-circulating the medium by conducting the medium through one or more inlet channel and the one or more third channel to the hot medium generating means.

Alternatively, the object of the present invention is achieved by a method for de-icing railway vehicles according to the per-characterized portion of claim 14, characterized in that the device comprises
- a medium arrangement configured to spray the medium from the first outlets, and comprising hot medium generating means, one or more first channel for conducting hot medium from the hot medium generating means to the first nozzle arrangement, one or more inlet channel arranged between at least one or more first outlets for re-circulating the medium and one or more third channel for conducting the medium from the one or more inlet channel to the hot medium generating means, and
- a control unit configured to control the device, and whereby the control unit uses a computer comprising a software program adapted to control the device, and wherein the method comprises the steps of
- presenting a railway vehicle on the rail in the device,
- determining the height of the first nozzle arrangement by i) selecting a type of railway vehicle in the software program, and/or ii) measuring the height of the railway vehicle in relation to the rail and entering measured data in the software program,
- adjusting the height of the first nozzle arrangement by means of the lifting arrangement in accordance with the determined height,
- driving the hot medium from the hot medium generating means through the one or more first channel and the first outlets,
- re-circulating the medium by conducting the medium through one or more inlet channel and the one or more third channel to the hot medium generating means.

In one embodiment of the alternative method, the device further comprises a second nozzle arrangement configured to remove ice from at least the underside of the railway vehicle and comprising a plurality of second outlets separately arranged along the longitudinal axis, and whereby the second outlets are directed towards the underside of the railway vehicle, and whereby the medium arrangement comprises a second channel for conducting hot medium from the hot medium generating means to the second nozzle arrangement.

In another embodiment of the method, the lifting arrangement moves the first nozzle arrangement continuously up and down in relation to the rail.

### BRIEF DESCRIPTION OF THE DRAWINGS

- Fig 1: shows schematically a top view of the de-icing device according to an embodiment of the present invention.
- Fig 2: shows schematically a top view of the de-icing device according to another embodiment of the present invention.
- Fig 3a: shows schematically a side view of the de-icing device according to another embodiment of the present invention extending along a transversal axis.
- Fig 3b: shows schematically a side view of the de-icing device according to an embodiment of the present invention extending along a transversal axis.
- Fig 4: shows schematically a side view of a first nozzle arrangement extending along a longitudinal axis of the rail.

### DETAILED DESCRIPTION OF VARIOUS EMBODIMENTS OF THE INVENTION

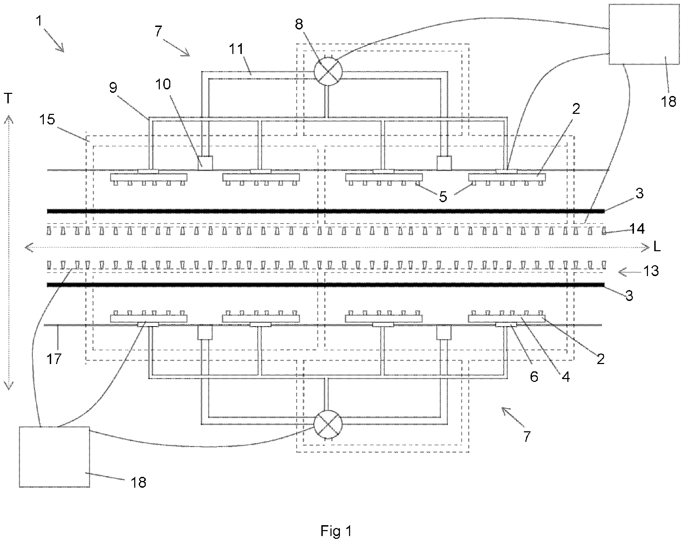

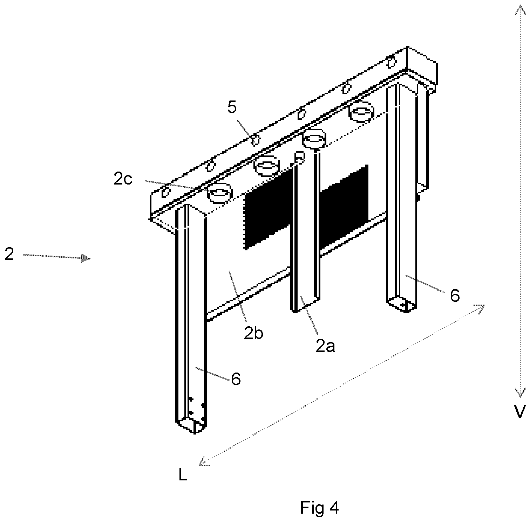

Fig 1 shows a device 1 according to one embodiment of the invention, which can be used for de-icing railway vehicles 12 (hereinafter also referred to as trains). The train 12 may comprise one or more wagons 12a. A first nozzle arrangement 2 is shown along a longitudinal axis L of the rail 3. The nozzle arrangement 2 may comprise a plurality of separated first nozzle modules 4, whereby each module 4 comprises a plurality of first outlets 5. The first outlets 5 are separately arranged along the longitudinal axis L. (Fig 4) The first nozzle arrangement 2 may be present on one side of the rails only or the arrangement 2 may be present as a pair of first nozzle arrangement 2 on each side of the longitudinal axis L as shown in Fig 1. The first nozzle arrangement 2 may be fixedly arranged along the longitudinal axis L.

The distance between the first outlets 5 may vary between 0.50 and 1.5 m, or about 1 m. This distance will among others depend on the pressure by which a medium is sprayed from the first outlets 5 and/or the angle by which the medium is sprayed from the first outlets 5.

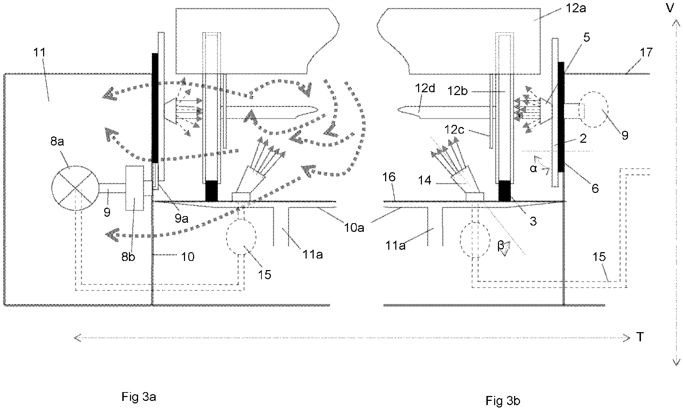

The nozzle arrangement 2 comprises a lifting arrangement 6 for moving the first nozzle arrangement 2 along a vertical axis V as shown in Fig 3 and 4. The lifting arrangement 6 may comprise a driving means (not shown) to move the first outlets 5 up and down. An example may be an electrical motor. As shown in Fig 4, the nozzle arrangement 2 may further comprise a stabilizer 2a to stabilize the driving means, and a protection cover 2b for safety, which may comprise at least partly a grid as indicated by the black area in the cover. Also shown are inlet connections 2c, which are connected to a first channel 9 and configured to conduct the melting medium to the first outlets 5.

As shown in Fig 1, the device 1 may comprise a second nozzle arrangement 13 positioned substantially next to the rail 3 as seen along a transversal axis T. The second nozzle arrangement 13 may be positioned on either side of a rail 3. The second nozzle arrangement 13 may be present on one side of the longitudinal axis L or the arrangement 13 may comprise a pair of nozzle arrangement 13 as shown in Fig 1. The pair of second nozzle arrangement 13 may be positioned between the pair of rails 3. The second nozzle arrangement 13 may be fixedly arranged along the longitudinal axis L and/or along the transversal axis T.

The second nozzle arrangement 13 comprises a plurality of second outlets 14, which may be separately arranged along the longitudinal axis L. The distance between the second outlets 14 may vary between 0.50 and 1.5 m, or about 1 m. This distance will among others depend on the pressure by which the medium is sprayed from the second outlets 14 and/or the angle by which the medium is sprayed from the second outlets 14. Similar to the first nozzle arrangement 2, the second nozzle arrangement 13 may comprise of a plurality of separated second nozzle modules (not shown), whereby each module comprises a plurality of second outlets 14.

The device 1 further comprises a medium arrangement 7. This medium arrangement 7 comprises a hot medium generating means 8 configured to heat up a melting medium (indicated by the arrows from the outlets 5, 14 in Fig 3a, 3b). The hot medium generating means 8 also comprises a pump or ventilator 8a to drive the medium towards the first and second outlets 5, 14. This pump may be any driving means, such as a motor, for example an electrical motor. The hot medium generating means 8 may separately comprise a heating member 8b to heat up the medium.

The hot medium is conducted to the first outlets 5 through one or more first channel 9. A flexible tube 9a may be used to movably connect the first channel 9 to the nozzle arrangement 2. The hot medium is sprayed or blown out of the first outlets 5 into an area at the side of the train 12. The first outlets 5 may be directed substantially along the transversal axis T. The hot medium will than be sprayed on the side of the train 12 at an angle of about 90° in relation to the vertical axis as indicated by the dark arrows in Fig 3a, 3b. Alternatively, the first outlets 5 are arranged to spray the medium at an angle between 30 to 120° in relation to the vertical axis V as indicated by the dotted arrows in Fig 3a, 3b.

In one embodiment, the direction of the first outlets 5 in relation to the vertical axis V can be adjusted at an angle α. The angle α may be between 10 and 170°. In another embodiment, the first outlets 5 are arranged at an angle α of substantially 90° in relation to the vertical axis V as shown in Fig 3b. The angle α may be continuously varied during the de-icing procedure. Different first outlets 5 may be directed at different angles α.

The choice for the angle of spraying from the outlets 5 or the direction of angle α of the first outlets 5 may, for example, depend on the medium used, the pressure by which the medium is sprayed from the first outlets 5 and/or the amount of ice that needs to be removed from the train 12.

The hot medium is conducted to the second outlets 14 through one or more second channel 15 as shown with dotted lines in Fig 1, 2 and 3. The hot medium is sprayed or blown out of the second outlets 14 into an area located under the wagon 12a of the train 12. As shown in Fig 3a, 3b, the second outlets 14 are directed upwards, toward the underside of the train 12 and away from the rail 3. The second outlets 14 may, for example, be directed towards the wagon 12a, the boogies, the wheels 12b, the braked 12c and/or the wheel axle 12d. The second outlets 14 may be directed at an angle β in relation to the transversal axis T. This angle β may be between 10 to 170°. In one embodiment, the angle β is between 35 and 60°, or between 40 and 50°. In another embodiment, the angle β is substantially 45°. In a further embodiment, the second outlets 14 are movably arranged, such that the angle β can be varied. In one embodiment, the angle β can be varied continuously during a de-icing procedure. Different second outlets 13 may be directed at different angles β.

The hot medium may be re-circulated from the area under the wagon 12a to the hot medium generating means 8 through one or more inlet channel 10. One or more inlet channel 10 may be located between the first outlets 5. If the first nozzle arrangement 2 comprises first nozzle modules 4, one or more outlet channel 10 may be present between the first nozzle modules 4 as shown in Fig 1. One or more inlet channel 10a may also be present under, between or laterally next to the rail 3 at a ground level 16. (Fig 3a, 3b)

A third channel 11 may be present to conduct the medium from the inlet channel 10 to the hot medium generating means 8. One or more additional pump (not shown) may be used to conduct or suck to medium back to the hot medium generating means 8. At the hot medium generating means 8, the medium will be heated again and re-circulated towards the first and second outlets 5, 14.

As shown in Fig 1, the medium arrangement 7 (8, 9, 10, 11, 15) may be present on both sides of the longitudinal axis L. Alternatively, the medium arrangement 7 comprises one hot medium generating means 8, which is present on one side of the longitudinal axis L.

All channels 9, 10, 11 and 15 may be located under the ground 16 and/or under a platform 17. The hot medium generating means 8 may also be located under the ground 16 and/or platform 17. (Fig 3)

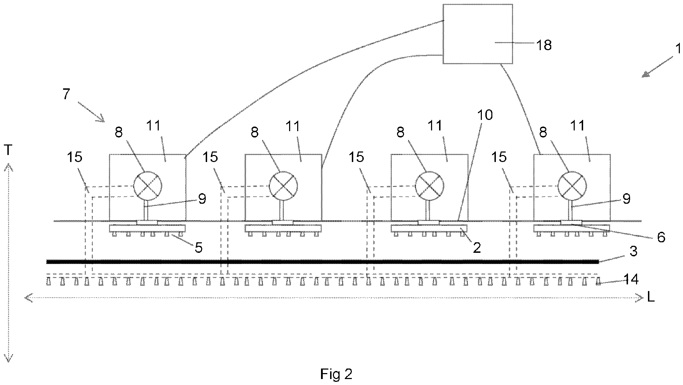

Fig 2 and 3a show another embodiment of the invention. In this embodiment a ventilation chamber or room is present under the platform 17. In this room, a hot medium generating means 8 is positioned and connected to the first and second nozzle arrangement 2, 13. The hot medium generating means 8 may comprise separately a pump or ventilator 8a and a heating member 8b. The hot medium generating means 8 conducts the hot medium through the first and/or second channel 9, 15 to the first and/or second nozzle arrangement 2, 13. A flexible tube 9a may be used to movably connect the first channel 9 to the nozzle arrangement 2. The inlet channel 10 may be a grid in the wall upon which the first nozzle arrangement 2 is mounted. An additional pump (not shown) may be present in the room 11 to suck the gas or other medium back to the hot medium generating means 8.

In both embodiments, the inlet channel 10 may (also) be a basin 10a to collect the medium from under the rails at or under the ground level 16. The medium may be re-circulated to the hot medium generating means 8 through the third channel 11, 11 a. As shown in Fig 3a, this channel may be the ventilation room 11 in case a hot gas is used as the melting medium.

The dotted thicker arrows in Fig 3a indicate the formation of a cushion under the wagon 12a by the hot gas and the re-circulation path of the gas into the room 11 via the inlet channel 10. Such a cushion may also be formed in the first embodiment of Fig 3b.

A control unit 18 may be used to control the device 1. The control unit 18 may be a computer, such as an industrial computer, which is programmed to control at least parts of the device 1. For example, the lifting arrangement 6 may be controlled by a computer program on the computer, which may be programmed to move the first nozzle arrangement 2 up and down in relation to the rail 3. This movement may be a continuous movement during a part or during the whole de-icing procedure. The control unit 18 may also control the medium arrangement 7 or the hot medium generating means 8 by controlling the pump 8a and/or the temperature of the hot medium. Further, the control unit 18 may control the angle α, β of direction of the first and/or second outlets 5, 14.

The control unit 18 may be located at a central control station, where more than one de-icing device 1 is being operated at the same time.

In a method for de-icing trains 12, the device 1 detailed above, or slightly variation of such a device 1, may be used. Such a method may be controlled partly or entirely by the control unit 18.

The train 12 will be run into the de-icing station to be positioned in the device 1. The station may have the same temperature as the outside temperature or the station may be warmer, such as room temperature.

In one step of the method, the height of the train is determined. The computer of the control unit 18 may be used to adjust the height of the first nozzle arrangement 2. This may be done by selecting a type of train 12 in the software program of the control unit 18. Alternatively, this may be done by first measuring the height of the train 12 in relation to the rail 3 and entering the measured height in the software program. Photocells, positioned on the device 1, may be used for this purpose. The input of the type of train 12 or the height of the train 12 may be used by the control unit 18 to adjust the height of the first nozzle arrangement 2. The input may be used to control the vertical movement of the first outlets 5 with help of the lifting arrangement 6, or at least the amplitude of said movement. Not only can the distance by which the first nozzle arrangement 2 is moved up and down in relation to the rails 3 be controlled depending on the height of the train 12, also the frequency of the up and down movement can be controlled. Further, in stead of moving up and down continuously, it may be possible to program the lifting arrangement 6 in such a way, that the first outlets 5 move at different velocities depending on the height of the first outlets 5 in relation to rail. For example, the velocity of the moving first outlets 5 may be slowed down or even halted, when the first outlets 5 are located at a height above the wheels 12b. At different heights, the direction of the first outlets (angle α) may be altered as well. Different computer programs may be written for different types of trains or for different degrees of de-icing that may be needed, depending on the amount of ice and snow that needs to be removed.

All types of trains can be used in the method of the present invention. Examples of train types are X-2000, X-50 and X-40.

The hot generating means 8 may be turned on to start heating the hot medium. The temperature of the medium may be lower between de-icing procedures and then increase for use during de-icing. This will save energy and make the device 1 even more environmentally friendly.

Hot gas may be used as a medium, such as air or oxygen. For example hot air may be heated to a temperature between 25 and 75°C, or 30 to 60°C, or 45 to 55°C. During de-icing, the temperature of the hot air may be about 55°C, while between de-icing procedures, the temperature may be about 45°C. A pressure between 500 and 3000 Pa (or N/m), or between 1000 and 2000 Pa may be used for hot air.

Steam may also be used for de-icing. The temperature of steam may be between 80 to 150°C, or 100 to 130°C, or about 120°C.

Alternatively, hot water may be used as a melting medium. The temperature of hot water is preferably between 15 to 60°C, or around 40°C.

After the height of the first nozzle arrangement 2 has been adjusted and the medium has been heated, the pump comprised in the hot medium generating means 8 may be started. Optionally, the angle α, β of the first and/or second outlets 5, 14 may be adjusted. This adjustment of the outlets 5, 14 is preferably done by the control unit 18.

Alternatively, the angles α, β of the first respectively second outlets 5, 14 may be continuously changed during the de-icing operation. For example, the angles α, β may continuously move between 10 and 170°, or 30 and 120°.

Hot medium, such as hot air, will be sprayed from the hot medium generating means 8 through the one or more first channel 9 and/or second channel 15 to the first and/or second nozzle arrangement 2, 13. There, the hot medium will be sprayed out of the first and/or second outlets 5, 14 toward the train 12.

Hot medium may remain present in the area under the wagon 12a in the form of gas. A cushion of hot gas may be formed in this area under the wagon 12a. For this purpose, the distance between the platform 17 and the wagon 12a of the train 12 is preferably small enough to prevent hot gas from escaping from the area under the wagon 12a. Alternatively, this area between the platform 17 and the wagon 12a may be covered to prevent leakage of the medium.

The medium is removed from the area under the wagon 12a with help of one or more inlet channel 10, 10a. The pressure in the area under the wagon 12a will push the medium through the one or more inlet channel 10, 10a and through one or more third channel 11, 11 a towards the hot medium generating means 8, where the medium is re-heated and used again for de-icing the train. A negative pressure in the one or more third channel 11, 11 a will further stimulate the re-circulation of the medium. Alternatively, one or more additional pump may be used to suck the medium back to the hot medium generating means 8.

The time needed for de-icing a train of standard length can be reduced to 0,5 to 4 hours, or 1 to 2 hours, when using the device 1 and method according to the invention.

The de-icing station may have a filter means and a fourth channel (not shown) located under the train, or the rail, for removal of dirt and water originating from the de-iced train.

In one embodiment, the de-icing station comprising the de-icing device 1 according to the present invention may resemble a "car wash street". In this embodiment, the train drivers enters the station and logs in to the station using an identification (ID) card or a code. An input device (not shown), such as a screen comprising input means and possibly a card reader may be used for this purpose. The input means may be a keyboard or a touch screen. The input device is preferably connected to the control unit 18.

After logging in, the driver indicates the type of train in the input device. The driver may also choose a particular program for de-icing. The de-icing programs may provide choices for different melting mediums, or different durations of time for the de-icing procedure. A start button may be used to start the de-icing procedure.

Indication means (not shown) on the platform may be connected to the input device to indicate to the driver, where to park the train in the de-icing station, for example, red and green lights can be used. Further, photocells may be present on the first nozzle arrangement 2 or elsewhere in the de-icing station, which cells are connected to the input device, and configured to indicate to the driver where to park the train.

The screen on the input device may also indicate the movement of the different parts of the device 1 and the different steps of the de-icing method during the de-icing procedure. For example, the vertical movement of the first nozzle arrangement 2, or the angles α, β of the first and/or second outlets 5, 14 may be shown. Further information may be related to the temperature and pressure used for the melting medium and the energy consumption of the de-icing procedure.

The method may be stopped when the de-icing program is finished or by pressing a stop button. The train driver may log out by using the ID card or a code. The input device may provide the train driver with a receipt, indicating information related to the use of the de-icing device 1. Through the connection between the input device and the control unit 18, such a receipt may also be send on-line. An automatic billing system can be implemented as well.

The indication means can be used to signal to the driver that the train can leave the de-icing station.

The control unit 18 together with the input device may be used to provide security measures, such as ensuring that only one train is present in the station at the time. For safety and costs reasons, it is important that all material used in the station and the device 1 are robust and strong enough to withstand harsh conditions that may occur at the station such as vibrations and shaking of platforms and rails and low and high temperatures.

The term "removing ice" and "de-icing" when used in this specification is taken to specify the removal of ice and/or snow. It is to be understood that possible dirt from the train also is being removed during the de-icing procedure.

The term "train" when used in this specification is taken to specify any railway vehicle, such as a train, a metro, tram and the like.

The term "comprises/comprising" when used in this specification is taken to specify the presence of stated features, integers, steps or components. However, the term does not preclude the presence or addition of one or more additional features, integers, steps or components or groups thereof.

All the operations performed by control unit 18 and input device may comprise a programmed computer apparatus. The present invention extends to a computer program, particularly computer programs on or in a carrier, adapted for putting the invention into practice. The program may be in the form of source code, object code, a code intermediate source and object code such as in partially compiled form, or in any other form suitable for use in the implementation if the method according to the invention. The program may either be a part of an operating system, or be a separate application. The carrier may be any entity or device capable of carrying the program. For example, the carrier may comprise a storage medium, such as a Flash memory, a ROM (Read Only Memory), for example a CD (Compact Disc) or a semiconductor ROM, an EPROM (Erasable Programmable ROM), an EEPROM (Electrically Erasable ROM), or a magnetic recording medium, for example a floppy disc. Further, the carrier may be a transmissible carrier such as an electrical or optical signal, which may be conveyed via electrical or optical cable or by radio or by other means. When the program is embodied in a signal, which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The present invention is not limited to the embodiments disclosed but may be varied and modified within the scope of the following claims.

## Claims

1. A device (1) for de-icing railway vehicles (12), comprising
- a first nozzle arrangement (2) adapted to be arranged along a longitudinal axis (L) of a pair of rails (3), configured to spray a medium adapted to remove ice from at least one side of the railway vehicle (12), comprising
- a plurality of first outlets (5) separately arranged along the longitudinal axis (L),
- a lifting arrangement (6) adapted to move the first nozzle arrangement (2) along a vertical axis (V) intersecting the longitudinal axis (L) and configured to adjust a height of the plurality of first outlets (5) in relation to the rail (3), and
- a medium adapted to remove ice,
**characterized in that**
the device (1) comprises a second nozzle arrangement (13) configured to remove ice from at least the underside of the railway vehicle (12) and comprising a plurality of second outlets (14) separately arranged along the longitudinal axis (L), and whereby the second outlets (14) are directed towards the underside of the railway vehicle (12).

2. The device (1) according to claim 1, **characterized in that** the device (1) comprises a medium arrangement (7) configured to spray the medium from the first and second outlets (5, 14), and comprising hot medium generating means (8), one or more first channel (9) for conducting hot medium from the hot medium generating means (8) to the first nozzle arrangement (2), one or more second channel (15) for conducting hot medium from the hot medium generating means (8) to the second nozzle arrangement (13).

3. The device (1) according to claim 1 or 2, **characterized in that** the device (1) comprises the medium arrangement (7) configured to spray the medium from the first and second outlets (5, 14), and comprising hot medium generating means (8), one or more first channel (9) for conducting hot medium from the hot medium generating means (8) to the first nozzle arrangement (2), one or more second channel (15) for conducting hot medium from the hot medium generating means (8) to the second nozzle arrangement (13), one or more inlet channel (10) arranged between at least one or more first outlets (5) for re-circulating the medium, and one or more third channel (11) for conducting the medium from the one or more inlet channel (10) to the hot medium generating means (8).

4. The device (1) according to any one of the preceding claims, **characterized in that** the lifting arrangement (6) moves the first nozzle arrangement (2) continuously up and down in relation to the rail (3).

5. The device (1) according to any one of the preceding claims, **characterized in that** the first and second nozzle arrangement (2, 13) are fixedly arranged along the longitudinal axis (L).

6. The device (1) according to any one of the preceding claims, **characterized in that** the first and second nozzle arrangement (2, 14) extends over a distance, which is at least equal to a length of a wagon (12a) of the railway vehicle (12).

7. The device (1) according to any one of the preceding claims, **characterized in that** the first nozzle arrangement (2) is divided in a plurality of first nozzle modules (4), whereby each module (4) comprises a plurality of first outlets (5) and a lifting arrangement (6), whereby each first nozzle module (4) is fixedly arranged along the longitudinal axis (L) and movably arranged along the vertical axis (V).

8. The device (1) according to any one of the preceding claims, **characterized in that** the second outlets (14) are directed upwards at an angle β between 10 to 170°C in relation to a transversal axis (T), which intersects the longitudinal axis (L).

9. The device (1) according to any one of the preceding claims, **characterized in that** the medium that is sprayed from the first and/or second outlets (5, 14) has a temperature between 25 and 150°C.

10. The device (1) according to any one of the preceding claims, **characterized in that** the medium is a hot gas.

11. The device (1) according to any one of the preceding claims, **characterized in that** the device (1) further comprises a control unit (18) configured to control the device (1).

12. The device (1) according to claim 11, **characterized in that** the control unit (18) uses a computer comprising a software program adapted to control the device (1), and whereby the height of the first nozzle arrangement (2) is determined by i) selecting a type of railway vehicle (12) in the software program, and/or ii) measuring the height of the railway vehicle (12) in relation to the rail (3) and entering measured data in the software program.

13. The device (1) according to any one of the preceding claims, **characterized in that** the first and/or the second nozzle arrangement (2, 13) comprises a pair of first and/or second nozzle arrangement (2, 13) extending on a respective side of the longitudinal axis (L).

14. A method for de-icing railway vehicles (12) using a device (1) comprising
- a first nozzle arrangement (2) adapted to be arranged along a longitudinal axis (L) of a pair of rails (3), configured to spray a medium adapted to remove ice from at least one side of the railway vehicle (12), comprising
- a plurality of first outlets (5) separately arranged along the longitudinal axis (L),
- a lifting arrangement (6) adapted to move the first nozzle arrangement (2) along a vertical axis (V) intersecting the longitudinal axis (L) and configured to adjust a height of the plurality of first outlets (5) in relation to the rail (3), and
- a medium adapted to remove ice,
**characterized in that** the device (1) comprises
- a second nozzle arrangement (13) configured to remove ice from at least the underside of the railway vehicle (12) and comprising a plurality of second outlets (14) separately arranged along the longitudinal axis (L), and whereby the second outlets (14) are directed towards the underside of the railway vehicle (12),
- a control unit (18) configured to control the device (1), and whereby the control unit (18) uses a computer comprising a software program adapted to control the device (1), and wherein the method comprises the steps of
- presenting a railway vehicle (12) on the rail (3) in the device (1),
- determining the height of the first nozzle arrangement (2) by i) selecting a type of railway vehicle (12) in the software program, and/or ii) measuring the height of the railway vehicle (12) in relation to the rail (3) and entering measured data in the software program,
- adjusting the height of the first nozzle arrangement (2) by means of the lifting arrangement (6) in accordance with the determined height, and
- spraying the medium from the first and second outlets (5, 14).

15. The method according to claim 14, **characterized in that** the device (1) comprises a medium arrangement (7) configured to spray the medium from the first and second outlets (5, 14), and comprising hot medium generating means (8), one or more first channel (9) for conducting hot medium from the hot medium generating means (8) to the first nozzle arrangement (2), one or more second channel (15) for conducting hot medium from the hot medium generating means (8) to the second nozzle arrangement (13), one or more inlet channel (10) arranged between at least one or more first outlets (5) for re-circulating the medium, and one or more third channel (11) for conducting the medium from the one or more inlet channel (10) to the hot medium generating means (8), and
whereby the last method step of spraying the medium is replaced by the steps of
- driving the hot medium from the hot medium generating means (8) through the one or more first and second channel (9, 15) and the first and second outlets (5, 14), and
- re-circulating the medium by conducting the medium through one or more inlet channel (10) and the one or more third channel (11) to the hot medium generating means (8).
